Europäisches Patentamt

(19) European Patent Office

Office européen des brevets

(11) Publication number: **0 116 166**
**A1**

(12) **EUROPEAN PATENT APPLICATION**

(21) Application number: **83112997.8**

(22) Date of filing: **22.12.83**

(51) Int. Cl.³: **F 16 K 31/10**
**F 15 B 5/00**

(30) Priority: **17.01.83 US 458384**

(43) Date of publication of application:
**22.08.84 Bulletin 84/34**

(84) Designated Contracting States:
**AT BE CH DE FR GB IT LI LU NL SE**

(71) Applicant: **HR TEXTRON INC.**
**25200 West Canyon Road**
**Valencia California 91355(US)**

(72) Inventor: **Coakley, James L.**
**221 Village Square**
**Fillmore California 93015(US)**

(74) Representative: **Vogeser, Werner, Dipl.-Ing. et al,**
**Patentanwälte Hansmann & Vogeser**
**Albert-Rosshaupter-Strasse 65**
**D-8000 München 70(DE)**

(54) **Force balanced two-way control valve.**

(57) A flapper nozzle two-way control valve for controlling
large flows of fluid under pressure from a source to a load by
displacement of the flapper (20) with respect to the outlet
orifice (24) of a nozzle (22). The forces developed by the fluid
impinging upon the flapper are balanced by counterforces
applied to the opposite side (42) of the flapper. Such
counterforces are developed by fluid of substantially identic-
al area impinging the flapper or by utilization of a mechanical
apparatus such as a ball (48) which engages the surface of
the flapper in response to application of fluid under pressure
thereto.

FIG. I

1

## FORCE BALANCED TWO-WAY CONTROL VALVE

### FIELD OF THE INVENTION

This invention relates generally to control valves and more particularly to a force balanced two-way control valve of the flapper nozzle type.

### DESCRIPTION OF THE PRIOR ART

Although there are many existing flapper nozzle valves in existence used for a multitude of applications, applicant is unaware of any force balanced nozzle flapper two-way control valves adapted for controlling large flows of fluid under pressure with the utilization of relatively lower power. The best prior art known to applicant consists of the following United States Patents:

| 3,225,346 | 3,703,185 |
| 3,390,615 | 3,892,260 |
| 3,447,555 | 3,894,552 |
| 3,556,150 | 3,919,923 |
|           | 4,131,130 |

2

## SUMMARY OF THE INVENTION

A pressure balanced nozzle flapper two-way control valve including a flapper and a nozzle wherein the nozzle has an outlet orifice which is a continuous slot. One surface of the flapper is positioned adjacent the orifice of the nozzle and the flapper is positioned to control the flow of fluid through the orifice. Means is included for applying a force to the flapper to substantially balance the force generated by the fluid from the nozzle orifice impacting the flapper.

## BRIEF DESCRIPTION OF THE DRAWINGS

FIGURE 1 is a cross sectional view of one embodiment of a two-way flapper nozzle control valve constructed in accordance with the present invention;

FIGURE 2 is a view of the apparatus of FIGURE 1 taken along the lines 2-2 thereof; and

FIGURE 3 is a view similar to FIGURE 2 but showing an alternative embodiment of a valve constructed in accordance with the present invention.

## DETAILED DESCRIPTION

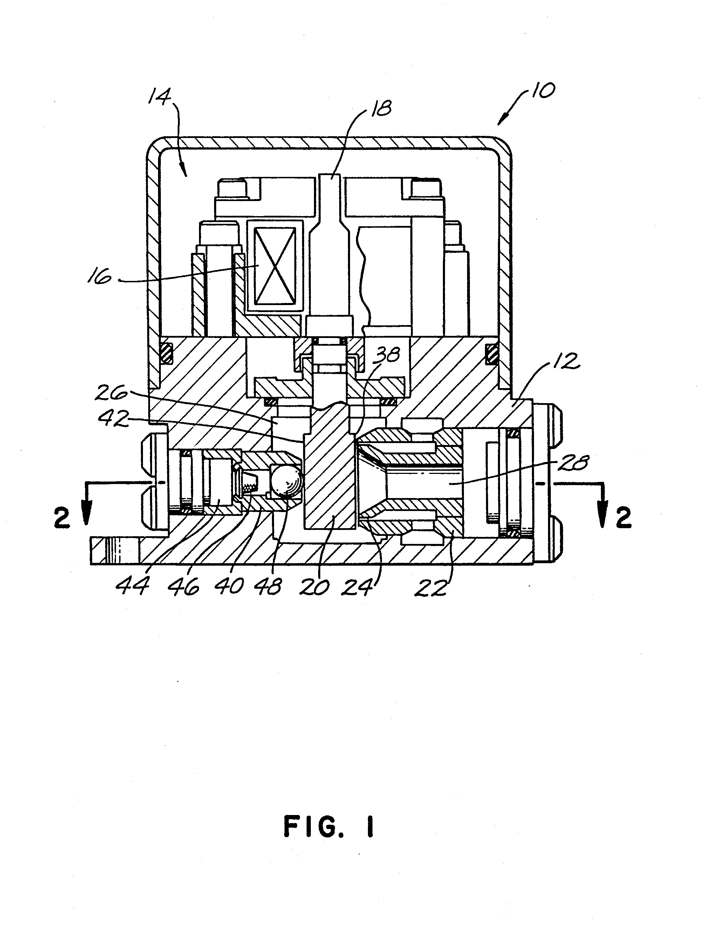

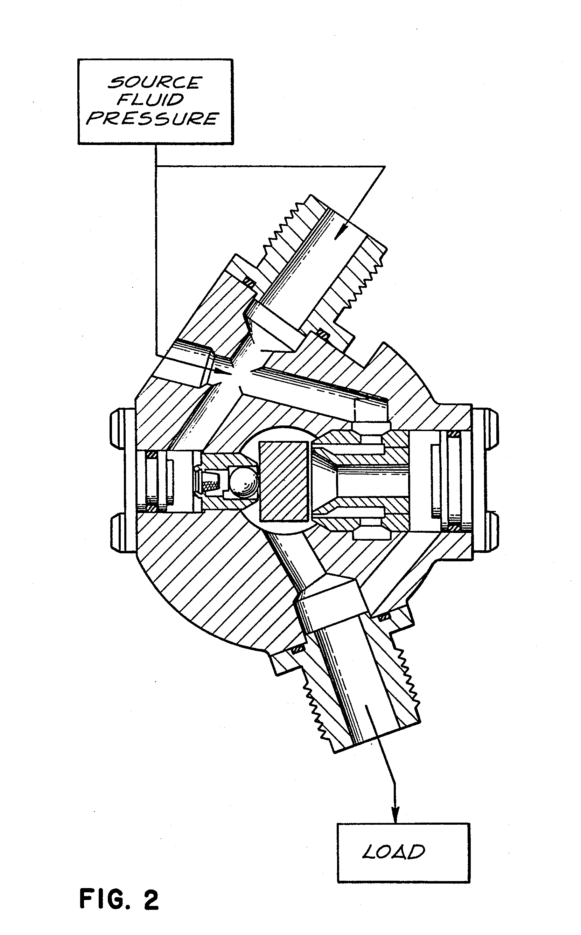

As shown in the drawings and more particularly FIGURES 1 and 2, there is provided a force balanced valve which controls the flow of fluid under pressure from a source thereof to a load responsive to electrical signals applied to a torque motor. More specifically, the valve 10 includes a body 12 upon which there is mounted a traditional torque motor 14. The torque motor responsive to electrical signals applied to a coil 16 moves an armature 18 which in turn positions a flapper 20 as is well known in the art. The body 12 carries a nozzle 22. The nozzle 22 includes an orifice 24 which is in the form of a continuous slot and preferably is annular in configuration. The annular orifice 24 provides a relatively large flow area and permits the flow of fluid both on the outer periperal area thereof into the chamber 26 as well as through the inner periphery thereof into chamber 28.

Movement of the flapper 20 toward and away from the orifice 24 meters the flow of fluid therethrough and to the load which is attached to the chambers 26 and 28. The flow of fluid through the orifice 24 impacts the surface 38 of the flapper 20 and thereby applies a force against the flapper tending to move it away from the orifice 24. To counteract this force an additional force generating means in the form of a second nozzle 40 is positioned on the opposite side 42 of the flapper 20. Fluid under pressure from the source thereof is provided to a chamber 44 and passes through a typical filtering device 46 to remove any contaminating particles which may be in the fluid to contact a ball 48 which essentially fills the opening in the nozzle 40. The ball 48 is positioned to move within the opening of the nozzle 40 responsive to the application of the fluid under pressure thereagainst. As the ball moves outwardly it engages the surface 42 of the flapper 20. The force generated by the fluid under pressure against the ball 48 counterbalances the forces generated by the impact of the fluid from the orifice 24 against the side 38 of the flapper 20. In this manner, the forces on the flapper from the fluid under pressure are essentially balanced so that at any point in time there is essentially zero force experienced by the flapper 20 from this cause. As a result of such zero force the forces needed to move the flapper to a predetermined metering position thereby to control the flow of fluid from the source to the load, is relatively small, thereby necessitating a relatively small torque motor 14.

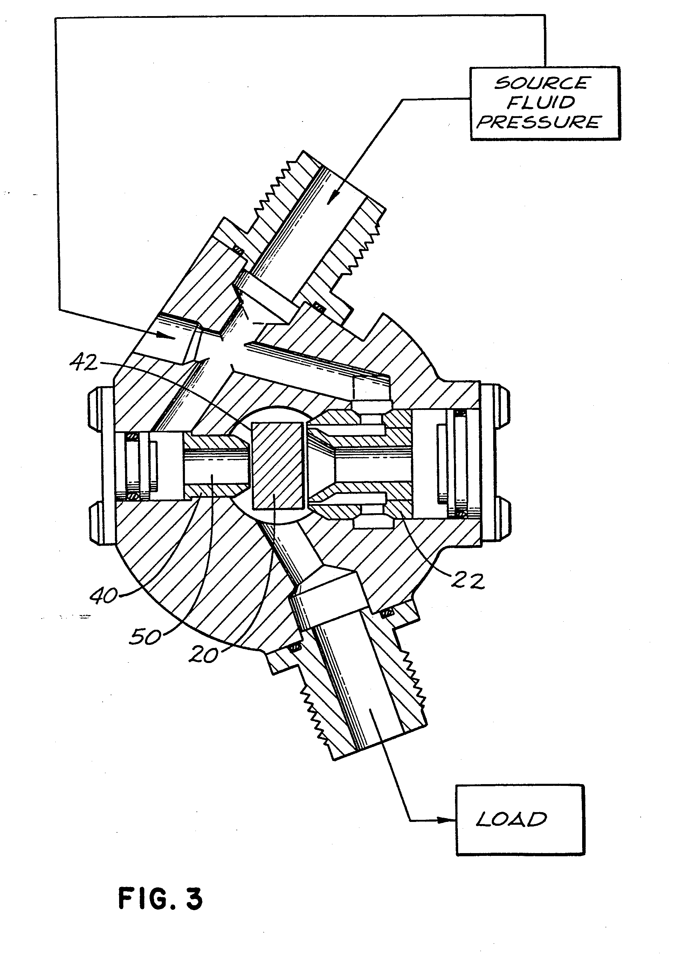

By reference to FIGURE 3, an alternative embodiment of a force balanced two-way control valve constructed in accordance with the present invention is illustrated. As is shown in FIGURE 3, the ball 48 has been removed from the nozzle 40 providing flow of fluid under pressure through the orifice 50 of the nozzle 40. Thus the fluid flowing through the orifice 50 impacts upon the surface 42 of the flapper 20 thereby counterbalancing the forces generated by the flow of fluid through the annular orifice 24 of the nozzle 22. To properly balance the forces generated by the fluid flow, the flow areas of the orifices of the two nozzles 40 and 22 are made substantially equal. In all other aspects the structure of FIGURE 3 is identical to that shown in FIGURES 1 and 2.

It will be recognized by those skilled in the art that by force balancing the flapper relatively small amounts of power can be applied to the torque motor 14 to position the flapper as may be desired to meter the flow of fluid from the source thereof to the load. Through the ability to control large amounts of flow of the fluid under presssure with relatively low power, that is, the ability to generate only small forces being required, one may use a relatively small torque motor thereby keeping down the size, weight and power consumption necessary to operate the valve as compared to prior art structures accomplishing similar results.

WHAT IS CLAIMED IS:

1. A pressure balanced nozzle-flapper two-way control valve comprising:

a nozzle having an outlet orifice which is a continuous slot;

a flapper having first and second surfaces disposed adjacent said nozzle orifice;

means for positioning said flapper with respect to said orifice to control the flow of fluid through said orifice, said fluid impacting said first surface; and

means for applying a force to said second surface of said flapper to substantially balance the force of said fluid impacting said first surface thereof.

2. A pressure balanced nozzle-flapper two-way control valve as defined in claim 1 wherein said force applying means is a mechanical member contacting said second surface of said flapper.

3. The control valve as defined in claim 2 wherein said mechanical member is a ball.

4. The control valve as defined in claim 3 which further includes a second nozzle having an orifice, said ball being disposed within said orifice of said nozzle, and means for applying fluid under pressure to said ball to urge the same into contact with said second surface of said flapper.

5.   A control valve as defined in claim 1 wherein said means for applying said force includes a second nozzle having an orifice therein, means for applying fluid under pressure to said nozzle to provide a flow of fluid under pressure through said orifice of said second nozzle against said second surface of said flapper, the area of said orifice of said second nozzle being substantially equal to the area of said orifice of said first nozzle.

1/3

FIG. 1

SOURCE
FLUID
PRESSURE

LOAD

FIG. 2

3/3

0116166

FIG. 3

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | FR-A-2 052 238 (MECI)<br>* Figures 3, 4, 9 *<br><br>--- | 1-4 | F 16 K 31/10<br>F 15 B 5/00 |
| A | US-A-3 457 955 (KLEINER et al.)<br>* Figure 1 *<br><br>--- | 1,5 | |
| A | DE-A-2 744 965 (DIGI-TABLE THIELEN)<br><br>--- | | |
| A | DE-A-2 054 766 (VEB KOMBINAT KRAFTWERKSANLAGENBAU)<br><br>--- | | |
| A | US-A-2 954 794 (PAINE)<br><br>--- | | |
| D,A | US-A-3 894 552 (BOWDITCH)<br><br>--- | | TECHNICAL FIELDS SEARCHED (Int. Cl. 3) |
| D,A | US-A-3 447 555 (JENNEY)<br><br>----- | | F 15 B 5/00<br>F 15 B 9/00<br>F 15 B 13/00<br>F 16 K 31/00 |

The present search report has been drawn up for all claims

| Place of search | Date of completion of the search | Examiner |
|---|---|---|
| BERLIN | 11-04-1984 | SCHLABBACH M |